Europäisches Patentamt

European Patent Office

Office européen des brevets

(11) Veröffentlichungsnummer: **0 333 975**

**A2**

(12) # EUROPÄISCHE PATENTANMELDUNG

(21) Anmeldenummer: 89100448.3

(51) Int. Cl.⁴: **B23B 31/12**

(22) Anmeldetag: 12.01.89

(30) Priorität: 19.03.88 DE 3809316

(43) Veröffentlichungstag der Anmeldung:
27.09.89 Patentblatt 89/39

(84) Benannte Vertragsstaaten:
ES FR GB IT

(71) Anmelder: **Röhm, Günter Horst**
**Heinrich-Röhm-Strasse 50**
**D-7927 Sontheim(DE)**

(72) Erfinder: **Günter, Horst Röhm**
**Heinrich-Röhm-Strasse 50**
**D-7927 Sontheim(DE)**
Erfinder: **Mack, Hans-Dieter**
**Richard Wagner Strasse.11**
**D-7927 Sontheim(DE)**

(74) Vertreter: **Fay, Hermann, Dipl.-Phys. Dr. et al**
**Dipl.-Phys. Hermann Fay und Dr. Joachim**
**Dziewior Ensingerstrasse 21 Postfach 17 67**
**D-7900 Ulm/Donau(DE)**

(54) **Bohrfutter.**

(57) Eines der Spannfutterteile, nämlich Futterkörper
(1) oder Spannring (2) besitzen an einer der Zahnreihe (8) wenigstens einer der Spannbacken (3) gegenüber liegenden Stelle ein Sichtfenster (11), durch
das hindurch die Zahnreihe (8) von außen sichtbar
ist. Das Sichtfenster (11) erstreckt sich über den
gesamten Verstellbereich der Spannbacke (3) und
läßt in diesem Bereich eine in ihrer Erscheinung
optisch hervorgehobene Marke (12) der Zahnreihe
(8) erkennen.

Fig 1

EP 0 333 975 A2

## Bohrfutter.

Die Erfindung betrifft ein Bohrfutter mit zwischen sich eine Aufnahme für das Bohrwerkzeug bildenden Spannbacken, mit einem Futterkörper, in dem die Spannbacken symmetrisch um die Drehachse verteilt in Führungsbohrungen angeordnet sind, und mit einem koaxial zur Drehachse am Futterkörper angeordneten Spannring, der drehbar und axial unverschiebbar am Futterkörper gelagert ist und zum Verstellen der Spannbacken ein mit der Drehachse koaxiales Spanngewinde aufweist, das an jeder Spannbacke mit einer an der Spannbacke vorgesehenen Zahnreihe im Eingriff steht.

Bohrfutter dieser Art sind in verschiedenen Ausführungsformen bekannt, haben aber alle den Umstand gemeinsam, daß keine Möglichkeit besteht, die Stellung ihrer Spannbacken genau zu erkennen und die Spannbacken entsprechend genau in eine vorgegebene bzw. gewünschte Stellung zu bringen, um beispielsweise und insbesondere die Aufnahme für das Bohrwerkzeug schnell und einfach auf eine für Hammerbohrer mit Standardschaft vorgegebene Weite einstellen zu können.

Der Erfindung liegt die Aufgabe zugrunde, ein Bohrfutter der eingangs genannten Art so auszubilden, daß die Stellung seiner Spannbacken leicht und genau erkennbar ist und danach die Spannbacken genau voreingestellt werden können.

Diese Aufgabe wird nach der Erfindung dadurch gelöst, daß eines der Spannfutterteile, nämlich der Futterkörper oder der Spannring, an einer der Zahnreihe wenigstens einer der Spannbacken gegenüber liegenden Stelle ein Sichtfenster aufweist, durch das hindurch die Zahnreihe von außen sichtbar ist.

Die Spannbacken eines solchen Bohrfutters sind im wesentlichen kreiszylindrische Bolzen, die auf der dem Spanngewinde zugewandten Seite abgeflacht und dort mit der Zahnreihe ausgestattet sind. In diesem Bereich berühren daher die Spannbacken in den Führungsbohrungen nicht den Futterkörper, so daß hier die Möglichkeit besteht, eine von außen gut sichtbare dauerhafte Marke an den Spannbacken vorzusehen, die nicht durch mit der Bewegung relativ zum Futterkörper sonst unvermeidbar verbundene Verschleißerscheinungen beeinträchtigt werden kann. In Abhängigkeit von der Lage dieser Marke können dann die Spannbacken sehr genau eingestellt werden.

Im einzelnen besteht die Möglichkeit, mehrere Marken längs der Zahnreihe der Spannbacke und in Verstellrichtung der Spannbacke ein im Vergleich zum Verstellbereich nur kurzes Sichtfenster vorzusehen. Die Spannbackeneinstellung erfolgt dann in Abhängigkeit davon, welche der Marken sich im Sichtfenster befindet. Besser und daher bevorzugt aber ist eine Ausführungsform, die dadurch gekennzeichnet ist, daß das Sichtfenster sich über den gesamten Verstellbereich der Spannbacke erstreckt und in diesem Bereich eine in ihrer Erscheinung hervorgehobene Marke der Zahnreihe erkennen läßt. Hier genügt nur eine einzige Marke zur Feststellung der Spannbackenstellung. Auch besteht hier die Möglichkeit, daß die hervorgehobene Marke vom Anfang oder Ende der Zahnreihe gebildet ist.

Sehr zweckmäßig kann die Marke auch von einem im Umfang dehnfähigen flexiblen Ring, insbes. aus Gummi, gebildet sein, der an den vom Futterkörper freigegebenen rückwärtigen Enden der Spannbacken gemeinsam um alle Spannbacken herumgeschlungen ist. Der Ring nimmt an den Bewegungen der Spannbacken teil und kann über seine Dehnung Abstandsänderungen ausgleichen, die sich beim Verstellen der Spannbacken ergeben, wenn die Spannbacken in zur Drehachse des Bohrfutters geneigten Führungsbohrungen laufen.

Im einzelnen kann sich das Sichtfenster im Futterkörper axial zwischen dem vorderen Ende des Futterkörpers und dem Spannring befinden. Will man die Beeinflussung des Futterkörpers durch ein solches Sichtfenster aber vermeiden, kann das Sichtfenster in der Spannhülse vorgesehen werden. Eine in dieser Hinsicht bevorzugte Ausführungsform ist dadurch gekennzeichnet, daß die Führungsbohrungen nach vorn in zur Drehachse geneigter Richtung zusammenlaufen und rückwärts in Öffnungen an der Mantelfläche des Futterkörpers münden, daß anschließend an die Öffnungen der Futterkörper und der Spannring zwischen sich einen Ringraum bilden, in den die Spannbacken aus den Führungsbohrungen austreten, und daß der Spannring an der Stelle des Ringraums die Sichtfenster aufweist. Hierfür bietet sich besonders die schon behandelte Ausbildung der Marke als alle drei Spannbacken an ihrem Ende umschlingender Gummiring an. Die Marke ist dann in jeder Drehstellung der Spannhülse durch das Sichtfenster hindurch erkennbar. Aber auch ohne solchen Gummiring stört ein Verdrehen der Spannhülse nicht das Erkennen der Marke. Denn entweder können mehrere Sichtfenster über den Spannringumfang vorgesehen sein, so daß die die Marke tragende Spannbacke und mit ihr die Marke selbst immer durch eines der Sichtfenster hindurch sichtbar ist, oder es sind an jeder Spannbacke Marken vorgesehen, so daß durch ein und dasselbe Fenster immer eine dieser Marken zu erkennen ist.

Im übrigen empfiehlt es sich bei Anordnung des Sichtfensters am Spannring, die Anordnung so zu treffen, daß der Spannring eine den Ringraum umgebende Spannhülse aufweist, die mit einem das oder die Sichtfenster aufweisenden Hülsenmantel versehen ist, der unter dem Neigungswinkel der Führungsbohrungen konisch zur Drehachse verläuft.

Im folgenden wird die Erfindung an in der Zeichnung dargestellten Ausführungsbeispielen näher erläutert; es zeigen:

Fig. 1 ein axial geschnittenes Bohrfutter in einer Darstellung mit in der linken Figurenhälfte vorgeschobener, in der rechten Figurenhälfte zurückgezogener Spannbacke,

Fig. 2 einen Axialschnitt durch eine andere Ausführungsform des Bohrfutters in einer der Fig. 1 entsprechenden Darstellung.

In der Zeichnung ist der Futterkörper mit 1 und der Spannring mit 2 bezeichnet. Die üblicherweise zu dritt über den Umfang des Bohrfutters verteilten und zwischen sich eine Aufnahme für das nicht dargestellte Bohrwerkzeug bildenden Spannbacken tragen die Bezugsziffer 3. Die Spanbacken 3 sind symmetrisch um die Drehachse 4 des Bohrfutters im Futterkörper 1 in Führungsbohrungen 5 angeordnet, die in zur Drehachse 4 geneigter Richtung verlaufen, so daß die Achsen der Führungsbohrungen 5 nach vorn, d. h. zum Bohrwerkzeug hin, zusammenlaufen. Der Spannring 2 ist koaxial zur Drehachse 4 am Futterkörper 1 angeordnet. Er ist drehbar und axial unverschiebbar am Futterkörper 1 gelagert und zum Verstellen der Spannbacken 3 in deren Führungsbohrungen 5 mit einem mit der Drehachse 4 koaxialen Spanngewinde 7 versehen. Diese Spanngewinde 7 ist entsprechend der Neigung der Spannbacken 3 gegen die Drehachse 4 konisch ausgebildet und steht in jeder Spannbacke 3 mit einer an der Spannbacke vorgesehenen Zahnreihe 8 im Eingriff, so daß eine Drehung des Spannrings 2 ein Verschieben der Spannbacken 3 in den Führungsbohrungen 5 ergibt. Die Spannbakken 3 sind im wesentlichen kreiszylindrische Bolzen, die auf der dem Spanngewinde 7 zugewandten Seite abgeflacht und dort mit der Zahnreihe 8 ausgestattet sind.

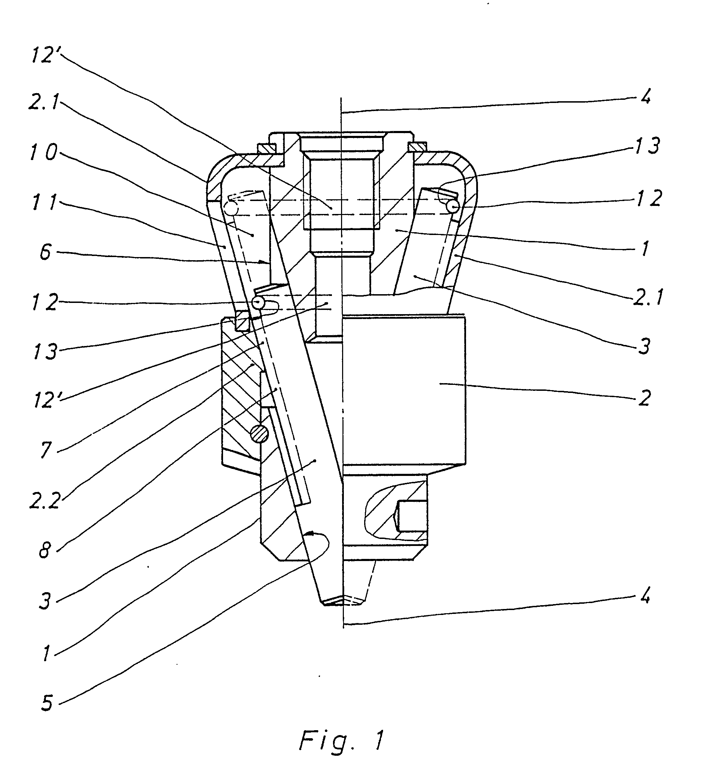

Die Führungsbohrungen 5 treten in Öffnungen 6 an der Mantelfläche des Futterkörpers 1 aus. Im Bereich dieser Öffnungen 6 besitzt der Spannring 2 einen Gewindering 2.2, an dem das Spanngewinde 7 ausgebildet ist. Weiter besitzt der Spannring eine Spannhülse 2.1, die zusammen mit dem Futterkörper 1 einen an die Öffnungen 6 anschließenden Ringraum 10 bildet, in den die Spannbacken 3 aus den Führungsbohrungen 5 und Öffnungen 6 austreten. Die Spannhülse 2.1 besitzt in Fig. 1 einen Hülsenmantel, der unter dem Neigungswinkel der Führungsbohrungen 5 konisch zur Drehachse 4 verläuft, so daß sich die Futterbacken 3 bei ihrer Zurückverstellung in gleichbleibendem Abstand an dem Hülsenmantel entlang verschieben, wie dies Fig. 1 erkennen läßt.

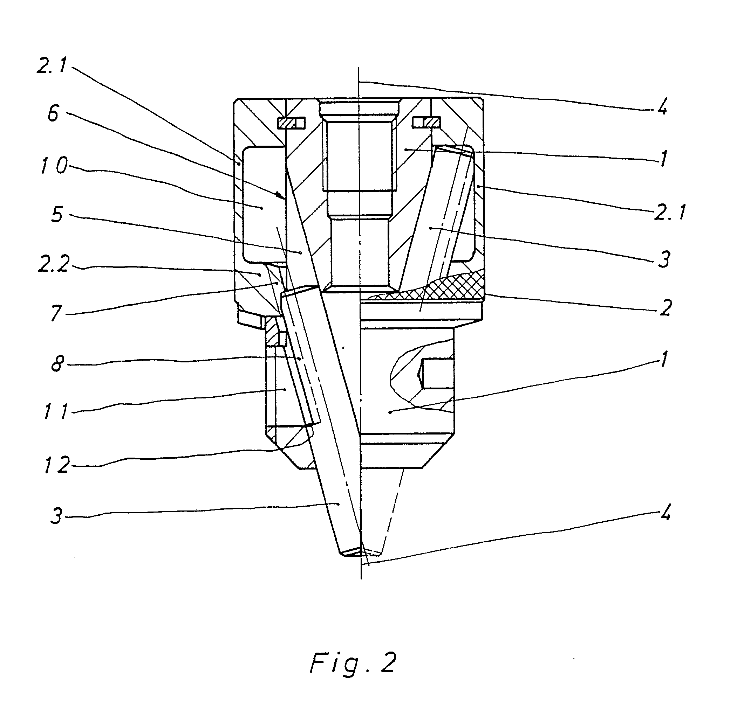

Eines der Spannfutterteile, nämlich in Fig. 1 der Spannring 2 und in Fig. 2 der Futterkörper 1, besitzen ein Sichtfenster 11 an einer Stelle, die der Zahnreihe 8 wenigstens einer der Spannbacken 3 gegenüberliegt, so daß durch das Sichtfenster 11 hindurch die Zahnreihe 8 von außen sichtbar ist. Durch das Fenster 11 ist eine in ihrer Erscheinung hervorgehobene Marke 12 der Zahnreihe 8 erkennbar, die sich beim Verstellen der Spannbacke 3 entsprechend längs des Sichtfensters 11 über den Verstellbereich der Spannbacke 3 bewegt. Im Ausführungsbeispiel nach Fig. 2 ist diese Marke 12 unmittelbar vom vorderen Ende der Zahnreihe 8 gebildet, im Ausführungsbeispiel nach Fig. 1 kann diese Marke das hintere Ende der Zahnreihe sein. Jedoch ist in Fig. 2 die Marke 12 im einzelnen von einem im Umfang dehnfähigen flexiblen Ring $12'$ aus Gummi gebildet, der an den vom Futterkörper 1 freigegebenen rückwärtigen Enden der Spannbacken 3 gemeinsam um alle Spannbacken 3 herumgeschlungen ist und an den Spannbackenenden in einer Nut 13 liegt. Der Gummiring $12'$ nimmt daher an den Spannbackenverstellungen teil, wobei er sich in seiner Umfangslänge dehnt oder zusammenzieht, je nach dem sich ändernden Abstand der Spannbacken 3 voneinander.

Das Sichtfutter 11 im Ausführungsbeispiel nach Fig. 1 befindet sich in der Spannhülse 2 an der Stelle des Ringraums 10, im Ausführungsbeispiel nach Fig. 2 im Futterkörper 1 axial zwischen dem vorderen Ende des Futterkörpers 1 und dem Spannring 2, wobei der Abstand zwischen dem vorderen Futterkörperende und dem Spannring 2 jedenfalls größer als der axiale Verstellbereich der Spannbacken 1 ist.

## Ansprüche

1. Bohrfutter mit zwischen sich eine Aufnahme für das Bohrwerkzeug bildenden Spannbacken (3), mit einem Futterkörper (1), in dem die Spannbacken (3) symmetrisch um die Drehachse (4) verteilt in Führungsbohrungen (5) angeordnet sind, und mit einem koaxial zur Drehachse (4) am Futterkörper (1) angeordneten Spannring (2), der drehbar und axial unverschiebbar am Futterkörper (1) gelagert ist und zum Verstellen der Spannbacken (3) ein mit der Drehachse (4) koaxiales Spanngewinde (7) aufweist, das an jeder Spannbacke (3) mit einer an der Spannbacke vorgesehenen Zahnreihe (8) im Eingriff steht, dadurch gekennzeichnet, daß eines der Spannfutterteile, nämlich Futterkörper (1) oder Spannring (2), an einer der Zahnreihe (8) wenigstens einer der Spannbacken (3) gegenüber liegenden Stelle ein Sichtfenster (11) aufweist, durch das hindurch die Zahnreihe (8) von außen sichtbar ist.

2. Bohrfutter nach Anspruch 1, dadurch gekennzeichnet, daß das Sichtfenster (11) sich über den gesamten Verstellbereich der Spannbacke (3) erstreckt und in diesem Bereich eine in ihrer Erscheinung hervorgehobene Marke (12) der Zahnreihe (8) erkennen läßt.

3. Bohrfutter nach Anspruch 2, dadurch gekennzeichnet, daß die hervorgehobene Marke (12) vom Anfang oder Ende der Zahnreihe (8) gebildet ist.

4. Bohrfutter nach Anspruch 2, dadurch gekennzeichnet, daß die hervorgehobene Marke (12) von einem im Umfang dehnfähigen flexiblen Ring, insbesondere aus Gummi, gebildet ist, der an den vom Futterkörper (1) freigegebenen rückwärtigen Enden der Spannbacken (3) gemeinsam um alle Spannbacken (3) herumgeschlungen ist.

5. Bohrfutter nach einem der Ansprüche 1 bis 4, dadurch gekennzeichnet, daß sich das Sichtfenster (11) im Futterkörper (1) axial zwischen dem vorderen Ende des Futterkörpers und dem Spannring (2) befindet.

6. Bohrfutter nach einem der Ansprüche 1 bis 4, dadurch gekennzeichnet, daß die Führungsbohrungen (5) nach vorn in zur Drehachse (4) geneigter Richtung zusammenlaufen und rückwärts in Öffnungen (6) an der Mantelfläche des Futterkörpers (1) münden, daß anschließend an die Öffnungen (6) der Futterkörper (1) und der Spannring (2) zwischen sich einen Ringraum (10) bilden, in den die Spannbacken (3) aus den Führungsbohrungen (5) austreten, und daß der Spannring (2) an der Stelle des Ringraums (10) die Sichtfenster (11) aufweist.

7. Bohrfutter nach Anspruch 6, dadurch gekennzeichnet, daß der Spannring (2) eine den Ringraum (10) umgebende Spannhülse (2.2) aufweist, die mit einem das oder die Sichtfenster (11) aufweisenden Hülsenmantel versehen ist, der unter dem Neigungswinkel der Führungsbohrungen (5) konisch zur Drehachse (4) verläuft.

12′

2.1

10

11

6

12

13

12′

7

2.2

8

3

1

5

4

13

12

1

2.1

3

2

4

*Fig. 1*

Günter Horst Röhm

Fig. 2

Günter Horst Röhm